# FASCICULE DE BREVET EUROPEEN

(11) **EP 2 780 220 B1**
(45) Date de publication et mention de la délivrance du brevet: **12.07.2017**
(21) Numéro de dépôt: 12795553.2
(22) Date de dépôt: 14.11.2012
(51) Int. Cl.: B62L 3/02, B60T 11/04

(54) **DISPOSITIF D'ACTIONNEMENT D'UN CÂBLE DE FREIN DE VÉLO**
BETÄTIGUNGSVORRICHTUNG FÜR EINEN FAHRRAD-BREMSKABEL
ACTUATION DEVICE FOR A BICYCLE BRAKE CABLE

(30) Priorité: 14.11.2011 FR 1103472
(43) Date de publication de la demande: 24.09.2014
(73) Titulaire: Saga Bike, 17410 Saint-Martin-de-Re (FR)
(72) Inventeur: SAVARD, Franck, F-17410 Saint-Martin-de-Re (FR)
(74) Mandataire: Aquinov
(86) Numéro de dépôt international: PCT/FR2012/052633
(87) Numéro de publication internationale: WO 2013/072630

(56) Documents cités:
- FR-A- 1 236 489
- JP-U- 61 104 292
- US-A- 3 759 352
- US-A- 4 066 154
- US-A- 5 660 082
- Anonyme: "Avid Guides de réglage - Maximisez vos performances de freinage", SRAM - Avid , 9 janvier 2013 (2013-01-09), XP002689885, Extrait de l'Internet: URL:http://www.sram.com/fr/avid/setup-guid es/hydraulic-brake-setup [extrait le 2013-01-09]
- Anonyme: "Leviers Louise FR, Louise", MAGURA , 9 janvier 2013 (2013-01-09), XP002689886, Extrait de l'Internet: URL:http://old.magura.com/uploads/media/do wnloads/Bremshebel_Louise_02.pdf [extrait le 2013-01-09]

## Description

La présente invention concerne un dispositif d'actionnement d'un câble de frein de vélo avec des moyens de réglage de garde. La présente invention concerne les vélos équipés de freins à commande par câble, qu'il s'agisse de moyens de freinage à patins ou à tambour.

Les commandes de frein de vélo concernées par la présente invention sont les commandes à poignées rapportées sur le guidon. Il est généralement prévu une commande pour chaque système de freinage, soit une commande pour le frein avant agissant sur la roue avant et une commande pour le frein arrière agissant sur le frein arrière.

On peut se reporter à la figure Art Antérieur qui montre une telle commande. Ces commandes de frein de vélo de type connu comprennent une partie rapportée sur le guidon, dite cocotte 10, positionnée à proximité des poignées 12 de manoeuvre du guidon. Ces cocottes 10 sont fixées par tout moyen adapté, généralement un collier 14 fendu ou en deux parties, une vis de serrage assurant le serrage radial sur ledit guidon.

Chaque cocotte reçoit une gaine 16. Dans la gaine 16 coulisse un câble 18. La cocotte 10 comporte un passage du câble 16 d'actionnement.

La gaine 16 est reçue dans une butée 20, solidaire de la cocotte 10 qui comporte des moyens 22 de réglage de la garde de freinage et de rattrapage de l'usure également.

Ces moyens 22 de réglage consistent généralement en une butée 20 qui est filetée et qui coopère avec un taraudage porté par la cocotte si bien que la butée peut être éloignée ou rapprochée de la cocotte par dévissage ou vissage.

Afin de conserver le réglage approprié, il est prévu un contre-écrou 24 qui se visse sur le filetage de la butée 20 de façon à interdire son dévissage intempestif.

De façon à pouvoir monter cette butée et ce contre-écrou sur le câble sans avoir à tout démonter, ces deux pièces sont généralement fendues suivant une génératrice.

Cette cocotte comporte un levier 26 monté pivotant par rapport à la cocotte, autour d'un axe 28. Ce levier assure la démultiplication, en plus de la démultiplication liée au système de freinage proprement dit qu'il soit à patins ou à tambour.

Le levier 26 porte un logement pour recevoir la tête de câble et assurer la traction du câble en translation dans la gaine. En effet, chaque câble de vélo du commerce possède une extrémité du câble noyée dans une tête, généralement en alliage d'aluminium.

Cet agencement présente de nombreux inconvénients.

Le premier est le réglage de la butée car souvent le contre-écrou est bloqué par l'oxydation, les salissures. Si le contre-écrou peut se dévisser, c'est la butée elle-même dont le filetage peut être bloqué et comme les possibilités de saisie de la butée pour la faire tourner sont limitées sans recourir à une pince, l'opération reste difficile.

Dans le cas où les deux éléments peuvent être vissés ou dévissés, ils peuvent aussi se retirer du câble inopinément et être perdus.

De plus, si l'utilisateur oublie de resserrer le contre-écrou, le réglage de la butée peut se modifier du fait des vibrations au fur et à mesure de l'utilisation. Dans l'agencement de l'art antérieur, on note surtout que le câble et la gaine de chaque commande sont dans une position telle que la butée 20 est éloignée du guidon et donc que le câble qui s'y loge est également éloigné. Ceci peut conduire à des accrochages intempestifs dans des branches par exemple et donc à des accidents, ceci en plus d'un aspect inesthétique marqué. Il est possible de loger les gaines dans le guidon mais ceci est réservé aux modèles de vélo de haut de gamme généralement mais dans tous les cas, la butée, la gaine et le câble restent éloignés du guidon.

Enfin, l'agencement du dispositif de commande de l'art antérieur représenté sur la figure Art Antérieur présente un inconvénient mécanique non négligeable qui concerne le point de traction. Comme la tête de câble est retenue dans son logement et que le levier est monté pivotant autour d'un axe, le logement décrit un déplacement curviligne donc la tête de câble doit bouger dans son logement et subir un pivotement sur elle-même ce qui provoque souvent une usure prématurée de la liaison tête de câble/câble. Dans tous les cas, le câble coulisse dans la gaine mais après l'extrémité de la gaine, le câble passe à travers la butée qui, elle, ne s'oriente pas puisqu'elle est solidaire de la cocotte. Ceci conduit aussi à une usure prématurée du câble lui-même. Les documents FR1236489 et US4066154 divulguent un dispositif d'actionnement d'un câble d'un système de frein d'un vélo selon le préambule de la revendication 1. La présente invention propose un dispositif d'actionnement d'un câble de frein de vélo avec des moyens de réglage de garde, dispositif qui pallie tous les inconvénients précités.

Le dispositif selon la présente invention permet un réglage simple de la garde, supprime les usures prématurées du câble et de la tête de câble en conservant un point de traction aligné avec la butée de gaine, qui permet de positionner le point de traction de câble sur la cocotte au plus près du guidon et donc de supprimer l'écartement des ensembles gaine/câble du guidon, qui est simple de montage, qui est compact et esthétique.

Le dispositif selon la présente invention est maintenant décrit en détail suivant un mode de réalisation particulier, non limitatif, cette description étant établie en regard des dessins annexés, dessins sur lesquels les différentes figures représentent:

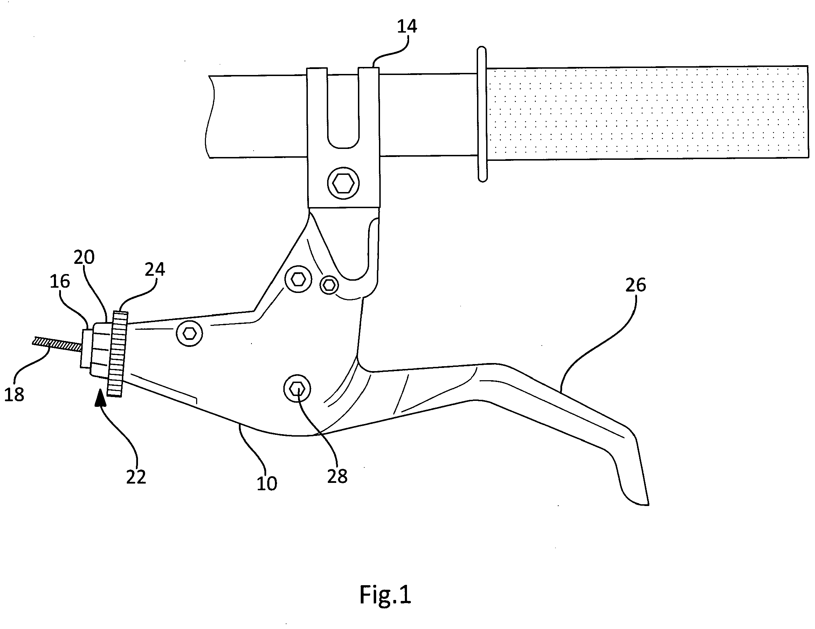

- Figure 1 : une vue d'une commande à levier de l'Art Antérieur,

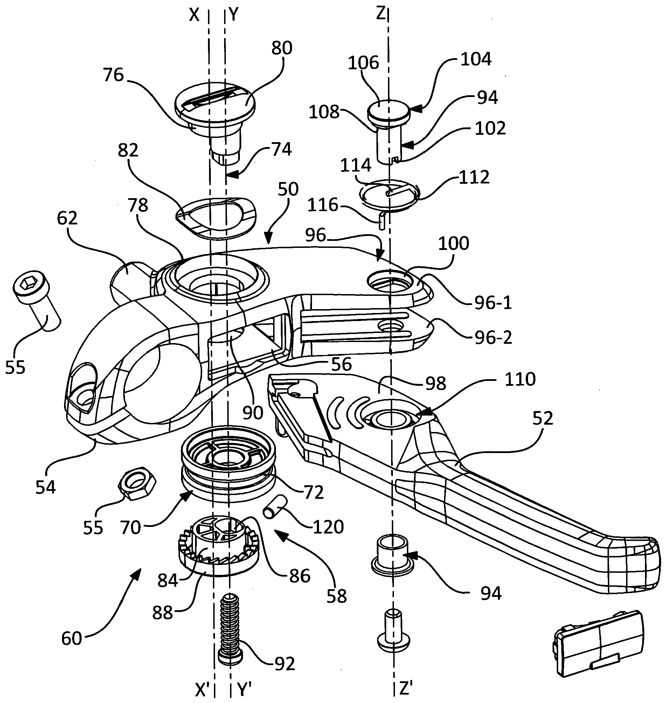

- Figure 2 : une vue en éclaté du dispositif selon la présente invention,
- Figure 3 : une vue en coupe par un plan vertical du dispositif selon l'invention, représenté sur la figure 2, une fois assemblé,
- Figure 4 : une vue en coupe par un plan horizontal du dispositif selon l'invention, représenté sur la figure 2, une fois assemblé,
- Figure 5 : une vue en perspective du dispositif selon l'invention représenté sur la figure 2, une fois assemblé, monté sur un guidon.

Sur les figures,3 et 42, on a représenté un dispositif selon la présente invention qui comprend une cocotte 50 susceptible d'être rapportée sur un guidon et un levier 52 d'actionnement.

La cocotte 50 comporte une bride 54 de fixation au guidon avec sa vis 55 et un logement 56 qui reçoit des moyens 58 de réglage de la garde comprenant un renvoi 60 d'angle.

Le logement 56 est muni d'une butée 62 de réception de la gaine 64 d'un câble 66 comportant une tête 68 de traction. Le logement 56 est de forme aplatie, sensiblement disposé dans le plan horizontal lorsque le vélo est en position de roulage.

Le renvoi 60 d'angle comprend une poulie 70 avec une gorge 72, montée libre en rotation autour d'un axe 74 sensiblement perpendiculaire au plan du logement donc vertical lorsque le vélo est en position de roulage. La gorge 72 est adaptée pour recevoir le câble 66.

Cet axe 74 est solidaire d'un support comprenant une tête 76 supérieure qui vient se loger sur le dessus du logement 56 qui comporte une fenêtre 78 supérieure ménagée à cet effet. L'axe 74 est disposé de façon excentrée par rapport à la tête 76 supérieure. La tête 76 comporte un chapeau 80 qui vient en appui sur un lamage prévu au bord de la fenêtre 78.

On note aussi la présence d'une rondelle 82 ressort du type rondelle en clinquant gaufrée. Cette rondelle 82 se loge sous ledit chapeau 80.

L'axe 74 se prolonge sous la poulie 70 pour venir coopérer avec une tête 84 inférieure. Cette tête 84 inférieure reçoit l'extrémité de l'axe 74 dans un trou 86 lui-même excentré, de façon identique à l'axe 74 par rapport à la tête 76. Cette tête 84 inférieure est munie également d'un chapeau 88 inférieur dont la face intérieure est crantée pour coopérer avec un crantage de profil conjugué ménagé sur la fenêtre 90 destinée à recevoir ledit chapeau.

Les fenêtres 78 et 90 sont parfaitement centrées et alignées de façon à définir un axe XX'.

Les têtes 76 supérieure et 84 inférieure ainsi que les chapeaux tournent de façon centrée sur l'axe XX'.

Ce renvoi d'angle est complété par une vis 92 qui passe à travers un trou ménagé dans le chapeau 88 et vient visser dans le corps de l'axe 74.

L'axe 74, la tête 76 supérieure et le chapeau 80 supérieur sont monolithiques, constitués d'une seule et même pièce de préférence en matière plastique, moulée ou injectée.

Le chapeau 80 supérieur porte sur le dessus de façon avantageuse une fente à profondeur curviligne, du type apte à recevoir la tranche d'une pièce de monnaie. De même, la tête 84 inférieure et le chapeau 88 inférieur sont monolithiques, constitués d'une seule et même pièce de préférence en matière plastique, moulée ou injectée.

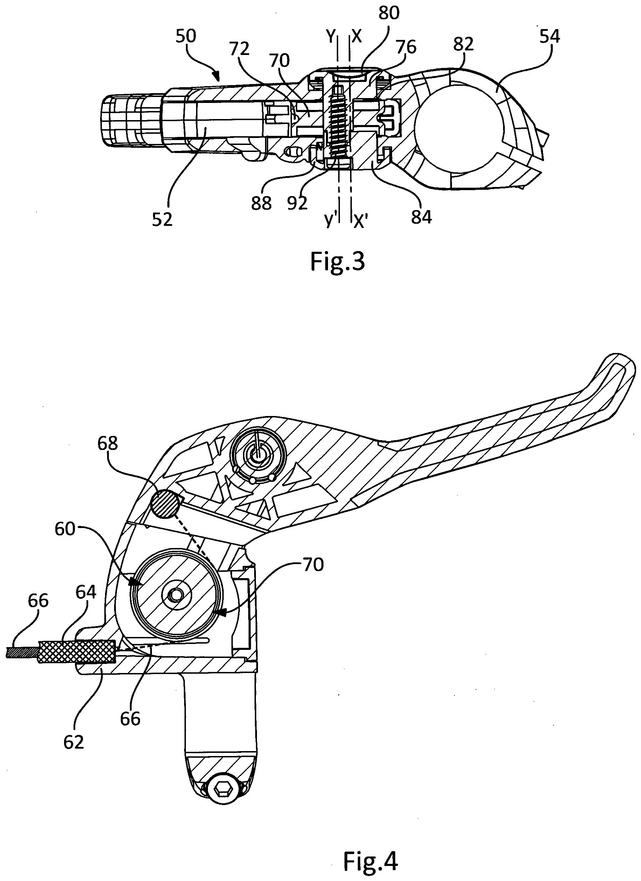

On note que l'axe 74 et la poulie 70 sont centrés suivant un axe YY'. Cet axe YY' est excentré par rapport à XX' et l'axe YY' tourne autour de XX' comme il sera expliqué plus avant dans le texte. Ceci est particulièrement visible sur la coupe de la figure 3.

Le levier 52 d'actionnement est monté pivotant autour d'un axe/vis 94, fileté sur sa partie inférieure, la cocotte 50 comprenant une chape 96 avec deux ailes 96-1 et 96-2, destinée à recevoir la platine 98 du levier. La cocotte 50 comporte un trou 100 dans l'aile 96-1 supérieure. Ce trou 100 est oblong sur la partie inférieure de l'épaisseur, sensiblement la moitié de l'épaisseur et circulaire sur la partie supérieure de l'épaisseur, soit l'autre moitié.

Le trou inférieur est circulaire et comporte un lamage, de façon connue, pour loger un écrou apte à recevoir un écrou coopérant avec le filetage de la partie inférieure de l'axe/vis 94.

L'axe/vis 94 comporte de plus une rainure 102.

L'axe/vis 94 porte également une tête 104 comprenant d'une part une partie 106 supérieure en forme de disque pour coopérer avec la partie supérieure du trou 100 et une partie 108 inférieure de profil conjugué du trou oblong anti rotation, ceci lorsque l'axe est mis en place avec l'écrou vissé.

Le levier 52 d'actionnement comporte un trou de passage de l'axe/vis 94. Il est également prévu une cuvette 110 de réception d'un ressort 112 de rappel. Ce ressort 112 de rappel comporte une branche 114 apte à coopérer avec la rainure 102 tandis que l'autre branche 116 coopère avec un trou ménagé dans la cuvette 110.

Le levier 52 d'actionnement pivote donc autour de l'axe ZZ' qui est l'axe longitudinal de l'axe/vis 94.

La platine 98 du levier 52 d'actionnement comporte également un logement 118 apte à recevoir la tête 68 de traction du câble 66.

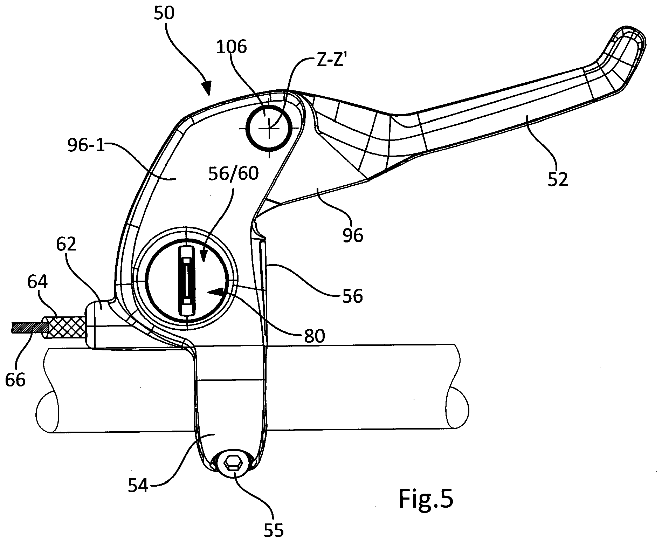

On note que la butée 62 de réception de la gaine 64 et de passage du câble 66 est à proximité immédiate de la bride 54 de fixation au guidon partiellement représenté sur la figure 5.

Le montage et le fonctionnement sont maintenant décrits en détail en regard des différentes figures prises indifféremment.

Le cheminement de la gaine est le suivant : la gaine 64 est en appui sur le système de freinage de façon connue à une extrémité (non représenté) et en appui sur la butée 62 de réception de la cocotte à l'autre extrémité.

Le cheminement du câble est le suivant : le câble 66 est lié à l'actionneur du système de freinage de façon connue à une extrémité (non représenté). Ce câble passe à travers la butée 62 de réception de la gaine et débouche dans le logement 56 et vient tangentiellement dans la gorge 72 de la poulie 70 et s'enroule sur un secteur de ladite poulie pour se prolonger jusqu'au logement 118 du levier 52 d'actionnement, apte à recevoir la tête 68 de traction du câble 66. Le montage du levier 52 d'actionnement consiste à introduire entre les deux ailes 96-1 et 96-2, la platine 98 dudit levier. Le ressort 112 de rappel est monté préalablement dans la cuvette 110. La branche 114 est alignée avec la rainure 102 tandis que l'autre branche 116 est introduite dans le trou ménagé dans la cuvette 110 et apte à l'immobiliser.

L'axe/vis 94 est alors enfoncé et la branche 114 coulisse dans la rainure. Pour que la partie 108 inférieure de la tête 104 puisse coopérer avec le trou oblong anti rotation il faut faire tourner l'axe/vis 94 autour de son axe ZZ', ce qui tend le ressort de rappel.

Une fois orienté, l'axe/vis 94 peut être complètement enfoncé jusqu'à ce que la partie 106 supérieure en forme de disque coopère avec la partie supérieure du trou 100.

Il suffit alors de visser l'écrou d'immobilisation.

Ainsi, le levier 52 d'actionnement subit un effort élastique de rappel. L'ensemble étant monté, l'utilisateur peut exercer un effort de freinage avec le dispositif selon la présente invention. Il lui suffit d'appuyer sur le levier 52.

Le levier pivote autour de l'axe/vis 94, ce qui fait pivoter la platine 98 et la tête 68 de traction du câble 66 qui se trouve dans le logement 118 de ladite platine 98 du levier 52 d'actionnement.

Le câble 66 tiré fait tourner la poulie 70 et se déplace en translation dans la gaine 64 et à travers la butée 68 de réception de ladite gaine.

Ainsi, le câble 66 travaille de façon très satisfaisante sans aucun frottement, sans angulation excessive, sans mouvement de la tête 68 de traction par rapport au câble 66 lui-même.

On note que la gaine 64 est positionnée au plus près du guidon et évite quasiment tout accrochage intempestif.

Lorsque le système de freinage le nécessite, par exemple suite à l'usure normale des organes de freinage du système de freinage, il faut pouvoir rattraper le jeu. A cet effet, l'utilisateur fait tourner le chapeau 80 supérieur solidaire de l'axe 74 autour duquel tourne la poulie, c'est-à-dire YY'. Pour cela l'utilisateur peut recourir à une pièce de monnaie qu'il positionne dans la fente ménagée à cet effet.

L'utilisateur fait donc tourner le chapeau 80 autour de l'axe XX' si bien que l'axe YY' tourne autour de l'axe XX' et on peut donc ainsi augmenter ou diminuer la distance du point de tangence du câble sur la poulie par rapport à l'axe XX'.

Le crantage assure et guide l'utilisateur pour un déplacement cran à cran. Un visuel peut permettre d'informer du sens de rotation et des degrés de déplacement en rotation de l'excentrique. La rondelle 82 ressort assure une immobilisation, une fois le réglage effectué.

Le chemin à parcourir par le câble, du fait du renvoi d'angle, est donc diminué ou augmenté par réglage de l'excentricité tandis que la longueur de gaine ne change pas.

Le réglage est extrêmement simple, rapide, immédiatement compréhensible pour l'utilisateur qui n'a pas à se préoccuper de l'agencement mécanique selon la présente invention.

Le risque de perte de pièces constructives est totalement supprimé.

Le déréglage est impossible par auto dévissage, ce qui garantit la sécurité sur ce plan.

La fabrication des pièces constituant ledit dispositif est simple et peu coûteuse. Les matériaux envisagés peuvent varier tant en couleur qu'en nature avec des polymères avec élastomères dans les zones requérant du grip et lisses, satinées dans les autres zones.

On note aussi que le dispositif est parfaitement abrité, limitant très fortement les risques de salissure.

Le logement 56 reçoit avantageusement un obturateur en caoutchouc de façon à le fermer et assurer une certaine étanchéité au moins à la poussière.

De même il peut être intéressant de régler l'angulation du levier et si nécessaire il est possible de prévoir une butée 120 de limitation de débattement du levier de façon à limiter l'éloignement du levier. Ceci est particulièrement utile pour les utilisateurs ayant de petites mains.

## Revendications

1. Dispositif d'actionnement d'un câble (66) d'un système de frein d'un vélo comprenant des moyens de réglage de garde, comprenant une cocotte (50) prévue pour être rapportée sur un guidon, une butée (62) de réception de la gaine (64) du câble (66) comportant une tête (68) de traction, un levier (52) d'actionnement dudit câble, le dispositif comprend un logement (56) qui reçoit des moyens (58) de réglage de la garde comprenant un renvoi (60) d'angle de guidage du câble (66), **caractérisé en ce que** le renvoie d'angle est monté sur excentrique.

2. Dispositif d'actionnement d'un câble (66) d'un système de frein d'un vélo selon la revendication 1, **caractérisé en ce que** le renvoi (60) d'angle comprend une poulie (70) avec une gorge (72), adaptée pour recevoir le câble (66), ladite poulie étant montée libre en rotation autour d'un axe (74) définissant un axe YY' excentré par rapport à un axe XX' de rotation du support dudit axe (74) par rapport à la cocotte.

3. Dispositif d'actionnement d'un câble (66) d'un système de frein d'un vélo selon la revendication 2, **caractérisé en ce que** le support de l'axe (74) comprend une tête (76) supérieure excentrée, qui se loge sur le dessus du logement (56) dans une fenêtre (78) supérieure et un chapeau (80) qui vient en appui sur un lamage prévu au bord de ladite fenêtre (78).

4. Dispositif d'actionnement d'un câble (66) d'un système de frein d'un vélo selon la revendication 3, **caractérisé en ce que** le support de l'axe (74) comprend une tête (84) inférieure qui reçoit l'extrémité dudit axe (74) dans un trou (86) excentré et un chapeau (88) inférieur qui vient se loger dans une fenêtre (90).

5. Dispositif d'actionnement d'un câble (66) d'un système de frein d'un vélo selon la revendication 4, **caractérisé en ce que** la tête (84) inférieure comporte une face intérieure crantée et la cocotte comprend un crantage de profil conjugué.

6. Dispositif d'actionnement d'un câble (66) d'un système de frein d'un vélo selon la revendication 5, **caractérisé en ce que** le chapeau (80) supérieur porte sur le dessus de façon avantageuse une fente à profondeur curviligne, apte à recevoir la tranche d'une pièce de monnaie.

7. Dispositif d'actionnement d'un câble (66) d'un système de frein d'un vélo selon l'une quelconque des revendications précédentes, **caractérisé en ce que** le levier (52) d'actionnement comprend une platine (98), montée pivotante autour d'un axe/vis (94), fileté sur sa partie inférieure, la cocotte (50) comprend une chape (96) destinée à recevoir ladite platine, un trou (100) oblong sur sa partie inférieure et circulaire sur la partie supérieure, un trou inférieur circulaire avec un lamage, ledit axe/vis (94) comporte de plus une rainure (102) positionnée sur une génératrice, une tête (104) comprenant d'une part une partie (106) supérieure en forme de disque pour coopérer avec la partie supérieure circulaire du trou (100) et une partie (108) inférieure de profil conjugué du trou oblong, ladite platine (98) comportant une cuvette (110) de réception d'un ressort (112) de rappel avec une branche (114) apte à coopérer avec la rainure (102) tandis que l'autre branche (116) coopère avec un trou ménagé dans la cuvette (110).

8. Dispositif d'actionnement d'un câble (66) d'un système de frein d'un vélo selon l'une quelconque des revendications précédentes, **caractérisé en ce que** la platine (98) du levier (52) d'actionnement comporte également un logement (118) apte à recevoir la tête (68) de traction du câble (66).

9. Dispositif d'actionnement d'un câble (66) d'un système de frein d'un vélo selon l'une quelconque des revendications précédentes, **caractérisé en ce qu'**il comprend une butée (120) de limitation de débattement du levier (52) d'actionnement.

## Patentansprüche

1. Betätigungsvorrichtung eines Kabels (66) eines Fahrradbremssystems, die Mittel zur Zugeinstellung aufweist, mit einem Gehäuse (50), das dazu vorgesehen ist, an einem Lenker befestigt zu sein, mit einem Lager (62) für die Aufnahme der Hülle (64) des Kabels (66), das einen Zugknopf (68) aufweist, und mit einem Betätigungshebel (52) des Kabels, wobei die Vorrichtung eine Aufnahme (56) aufweist, die die Mittel (58) für die Zugeinstellung aufnimmt, die eine Winkelumlenkung (60) der Führung des Kabels (66) umfassen, **dadurch gekennzeichnet, dass** die Winkelumlenkung exzentrisch montiert ist.

2. Betätigungsvorrichtung eines Kabels (66) eines Fahrradbremssystems nach Anspruch 1, **dadurch gekennzeichnet, dass** die Winkelumlenkung (60) eine Rolle (70) mit einer Vertiefung (72) aufweist, die zur Aufnahme des Kabels (66) eingerichtet ist, wobei die Rolle um eine Achse (74) frei drehbar montiert ist und eine Achse YY' bestimmt, die bezüglich einer Achse XX' für die Drehung der Halterung der Achse (74) bezüglich des Gehäuses vom Zentrum entfernt ist.

3. Betätigungsvorrichtung eines Kabels (66) eines Fahrradbremssystems nach Anspruch 2, **dadurch gekennzeichnet, dass** die Halterung der Achse (74) einen vom Zentrum entfernten oberen Kopf (76) umfasst, der auf dem oberen Bereich der Aufnahme (56) in einem oberen Fenster (78) ruht, und eine Kappe (80) umfasst, die sich auf eine am Rand des Fensters (78) vorgesehene Senkung abstützt.

4. Betätigungsvorrichtung eines Kabels (66) eines Fahrradbremssystems nach Anspruch 3, **dadurch gekennzeichnet, dass** die Halterung der Achse (74) einen unteren Kopf (84) umfasst, der das Ende der Achse (74) in einem vom Zentrum entfernten Loch (86) aufnimmt, und eine untere Kappe (88) umfasst, die in einem Fenster (90) ruht.

5. Betätigungsvorrichtung eines Kabels (66) eines Fahrradbremssystems nach Anspruch 4, **dadurch gekennzeichnet, dass** der untere Kopf (84) eine geriffelte Innenseite und dass das Gehäuse eine Riffelung mit entsprechendem Profil aufweist.

6. Betätigungsvorrichtung eines Kabels (66) eines Fahrradbremssystems nach Anspruch 5, **dadurch gekennzeichnet, dass** die obere Kappe (80) vorteilhafterweise im oberen Bereich einen in der Tiefe gekrümmten Schlitz aufweist, der dazu geeignet ist, den Rand eines Geldstücks aufzunehmen.

7. Betätigungsvorrichtung eines Kabels (66) eines Fahrradbremssystems nach einem der vorhergehenden Ansprüche, **dadurch gekennzeichnet, dass** der Betätigungshebel (52) eine Platte (98) aufweist, die um eine Achse/Schraube (94) schwenkbar montiert ist, die im unteren Bereich mit einem Gewinde versehen ist, dass das Gehäuse (50) ein zur Aufnahme der Platte vorgesehenes Gabelgelenk (96), ein in seinem unteren Bereich längliches und in seinem oberen Bereich kreisförmiges Loch (100) und ein mit einer Senkung versehenes unteres Loch aufweist, dass die Achse/Schraube (94) außerdem eine auf einer Stirnseite angeordnete Nut (102) und einen Kopf (104) aufweist, der einerseits einen scheibenförmigen oberen Teil (106), um mit dem oberen kreisförmigen Bereich des Lochs (100) zusammenzuwirken, und einen unteren Teil (108) mit einem dem länglichen Loch entsprechenden Profil aufweist, wobei die Platte (98) eine Senke (110) für die Aufnahme einer Rückstellfeder (112) aufweist, die über einen Arm (114) verfügt, der sich dazu eignet, mit der Nut (102) zusammenzuwirken, während der andere Arm (116) mit einem in der Senke (110) ausgebildeten Loch zusammenwirkt.

8. Betätigungsvorrichtung eines Kabels (66) eines Fahrradbremssystems nach einem der vorhergehenden Ansprüche, **dadurch gekennzeichnet, dass** die Platte (98) des Bestätigungshebels (52) auch ein Lager (118) für die Aufnahme des Zugknopfes (68) des Kabels (66) aufweist.

9. Betätigungsvorrichtung eines Kabels (66) eines Fahrradbremssystems nach einem der vorhergehenden Ansprüche, **dadurch gekennzeichnet, dass** diese einen Anschlag (120) zur Begrenzung der Auslenkung des Betätigungshebels (52) aufweist.

## Claims

1. A device for actuating a cable (66) of a bicycle brake system comprising clearance adjustment means, comprising an adjustment unit (50) designed to be attached to a handlebar, a stop (62) for receiving the sheath (64) of the cable (66) comprising a traction head (68), and a lever (52) for actuating said cable, the device comprises a housing (56) that receives clearance-adjustment means (58) comprising an angle transmission (60) for guiding the cable (66), **characterised in that** the angle transmission is mounted on an eccentric.

2. A device for actuating a cable (66) of a bicycle brake system according to claim 1, **characterised in that** the angle transmission (60) comprises a pulley (70) with a groove (72), suitable for receiving the cable (66), said pulley being mounted so as to be free to rotate about a spindle (74) defining an axis YY' off-centre with respect to a rotation axis XX' of the support of said spindle (74) with respect to the adjustment unit.

3. A device for actuating a cable (66) of a bicycle brake system according to claim 2, **characterised in that** the support of the spindle (74) comprises an off-centre top head (76), which is housed on top of the housing (56) in a top window (78), and a cap (80) that comes into abutment on a countersink provided at the edge of said window (78).

4. A device for actuating a cable (66) of a bicycle brake system according to claim 3, **characterised in that** the support of the spindle (74) comprises a bottom head (84) that receives the end of said spindle (74) in an off-centre hole (86) and a bottom cap (88) that is housed in a window (90).

5. A device for actuating a cable (66) of a bicycle brake system according to claim 4, **characterised in that** the bottom head (84) comprises a notched internal face and the adjustment unit comprises notching with a conjugate profile.

6. A device for actuating a cable (66) of a bicycle brake system according to claim 5, **characterised in that** the top cap (80) advantageously carries on the top a slot with a curved depth, able to receive the edge of a coin.

7. A device for actuating a cable (66) of a bicycle brake system according to any of the preceding claims, **characterised in that** the actuation lever (52) comprises a plate (98), mounted so as to pivot about a spindle/screw (94), threaded on its bottom part, the adjustment unit (50) comprises a clevis (96) intended to receive said plate, a hole (100) oblong on its bottom part and circular on the top part, and a circular bottom hole with a countersink, said spindle/screw (94) also comprises a groove (102) positioned on a generatrix, a head (104) comprising firstly a top part (106) in the form of a disc for cooperating with the circular top part of the hole (100) and a bottom part (108) with a profile conjugate with the oblong hole, said plate (98) comprising a cup (110) for receiving a return spring (112) with a branch (114) able to cooperate with the groove (102) while the other branch (116) cooperates with a hole provided in the cup (110).

8. A device for actuating a cable (66) of a bicycle brake system according to any of the preceding claims, **characterised in that** the plate (98) of the actuation lever (52) also comprises a housing (118) able to receive the traction head (68) of the cable (66).

9. A device for actuating a cable (66) of a bicycle brake system according to any of the preceding claims, **characterised in that** it comprises a stop (120) for limiting the movement of the actuation lever (52).
